# EUROPÄISCHE PATENTSCHRIFT

(11) **EP 0 550 869 B1**
(45) Veröffentlichungstag und Bekanntmachung des Hinweises auf die Patenterteilung: **16.04.1997**
(21) Anmeldenummer: 92121727.9
(22) Anmeldetag: 19.12.1992
(51) Int. Cl.: F41H 5/26, G02B 23/16

(54) **Winkelspiegel an der Ein-Ausstiegsluke eines Kampffahrzeuges**
Angle mirror on the hatch of a combat vehicle
Mirroir d'angle sur la trappe d'un véhicule de combat

(30) Priorität: 08.01.1992 DE 4200261
(43) Veröffentlichungstag der Anmeldung: 14.07.1993
(73) Patentinhaber: Wegmann & Co. GmbH, D-34127 Kassel (DE)
(72) Erfinder: Sprafke, Uwe, Dipl.-Ing., W-3501 Schauenburg (DE)
(74) Vertreter: Feder, Wolf-Dietrich, Dr. Dipl.-Phys.

(56) Entgegenhaltungen:
- EP-A- 0 230 521
- CH-A- 494 940
- DE-A- 3 305 882
- DE-C- 661 055

## Beschreibung

Die Erfindung betrifft einen Winkelspiegel an der Ein- Austiegsluke eines Kampffahrzeugs mit den Merkmalen aus dem Oberbegriff des Patentanspruchs 1.

Ein derartiger, in ein fahrzeugfestes Unterteil und ein mit dem verschiebbaren Deckelteil des Lukendeckels bewegbares Oberteil aufgeteilter Winkelspiegel ist bekannt und beispielsweise in DE-PS 33 05 882 beschrieben. Es hat sich herausgestellt, daß bei derartigen geteilten Winkelspiegeln im Bereich zwischen dem Unterteil und dem Oberteil Verschmutzungsgefahr besteht. Der Erfindung liegt die Aufgabe zugrunde, einen Winkelspiegel mit den Merkmalen aus dem Oberbegriff des Patentanspruchs 1 so auszubilden, daß die Verschmutzungsgefahr stark herabgesetzt wird, bzw. eine Reinigungsmöglichkeit des durch Verschmutzung gefährdeten Bereiches geschaffen wird.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den Unteransprüchen beschrieben.

Der Grundgedanke der Erfindung besteht darin, in dem Bereich zwischen dem verschiebbaren oberen Deckelteil und der Oberseite des Kampffahrzeugs eine Reinigungsbürste derart anzuordnen, daß diese jeweils beim Öffnen des Lukendeckels über die Oberseite des Unterteils des Winkelspiegels hinweggeführt wird und dessen Oberfläche reinigt. Hierbei hat es sich als besonders vorteilhaft erwiesen, wenn diese Reinigungsbürste als geschlossener Bürstenring ausgebildet ist, der im geschlossenen Zustand der Luke den Bereich des Zwischenraums zwischen dem oberen Deckelteil und der Fahrzeugoberseite, in dem sich Oberteil und Unterteil des Winkelspiegels gegenüberliegen, nach Art einer Bürstendichtung nach außen hin abdichtet. Die Reinigung beim Öffnen und Schließen des Lukendeckels erfaßt nur die Oberfläche des Unterteils des Winkelspiegels, auf der sich in erster Linie Schmutzteilchen absetzen können. Da es aber zweckmäßig ist, wenigstens von Zeit zu Zeit auch die Unterfläche des Oberteils des Winkelspiegels zu reinigen, hat es sich als vorteilhaft erwiesen, wenn das Winkelspiegelunterteil in den Innenraum des Kampffahrzeugs hinein abschwenkbar ausgebildet ist, womit durch die dann entstehende Durchtrittsöffnung hindurch der Zugang zur Unterfläche des Oberteils des Winkelspiegels ermöglicht ist und entsprechende Reinigungsarbeiten vorgenommen werden können. Außerdem können bei dieser Gelegenheit auch im Raum innerhalb der Reinigungsbürste angefallene Schmutzteilchen beseitigt werden.

Im folgenden wird anhand der beigefügten Zeichnungen ein Ausführungsbeispiel für einen Winkelspiegel nach der Erfindung näher erläutert.

In den Zeichnungen zeigen:
- Fig. 1: in einem vertikalen Längsschnitt die Teilansicht der Oberseite eines Kampffahrzeugs mit einer Luke und im Bereich des Lukendeckels angeordnetem Winkelspiegel im geöffneten Zustand der Luke;
- Fig. 2: im Vertikalschnitt und gegenüber Fig. 1 vergrößerter Darstellung den Bereich des am Lukendeckel angeordneten Winkelspiegels bei geschlossenem Lukendeckel;
- Fig. 3: in einer Darstellung analog Fig. 2 die gleiche Anordnung mit nach innen abgeschwenktem Unterteil des Winkelspiegels.

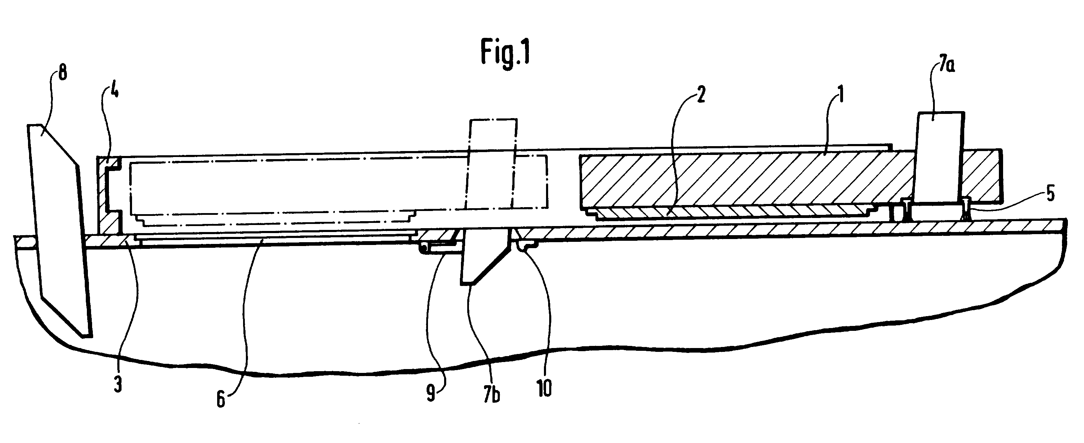

Fig. 1 zeigt in stark schematisierter Darstellung einen Teil eines Kampffahrzeuges, beispielsweise eines Kampfpanzers, im Bereich der Ein- Ausstiegsluke.

Oberhalb der von der Panzerung 3 umgebenen Lukenöffnung 6 ist ein oberer Deckelteil 1 des Lukendeckels angeordnet, der parallel zur Schließebene der Lukenöffnung 6 verschiebbar ist. Hierzu sind zu beiden Seiten des oberen Deckelteils 1 Schienen 4 angeordnet, in denen mit dem oberen Deckelteil 1 verbundene, nicht dargestellte Laufrollen geführt sind.

An der Unterseite des oberen Deckelteils 1 ist ein unterer Deckelteil 2 angeordnet. Dieser untere Deckelteil 2 ist im Gegensatz zum oberen Deckelteil 1 der äußeren Form der Lukenöffnung 6 angepaßt und über eine nicht dargestellte Verbindungsvorrichtung im oberen Deckelteil 1 verbunden. Dieser untere Deckelteil 2 ist in vertikaler Richtung anheb- und absenkbar. Beim Schließen der Luke wird der obere Deckelteil 1 solange verschoben bis sich der an seiner Unterseite angeordnete untere Deckelteil 2 genau über der Lukenöffnung 6 befindet. Dann wird der untere Deckelteil 2 solange abgesenkt bis sich sein Rand auf eine am oberen Rand der Lukenöffnung 6 angeordnete Dichtung auflegt. Beim Öffnen wird zunächst der untere Deckelteil 2 angehoben bis er sich oberhalb des oberen Randes der Lukenöffnung 6 befindet. Dann wird der obere Deckelteil 1 zusammen mit dem unteren Deckelteil 2 verschoben bis die Luke vollständig geöffnet ist.

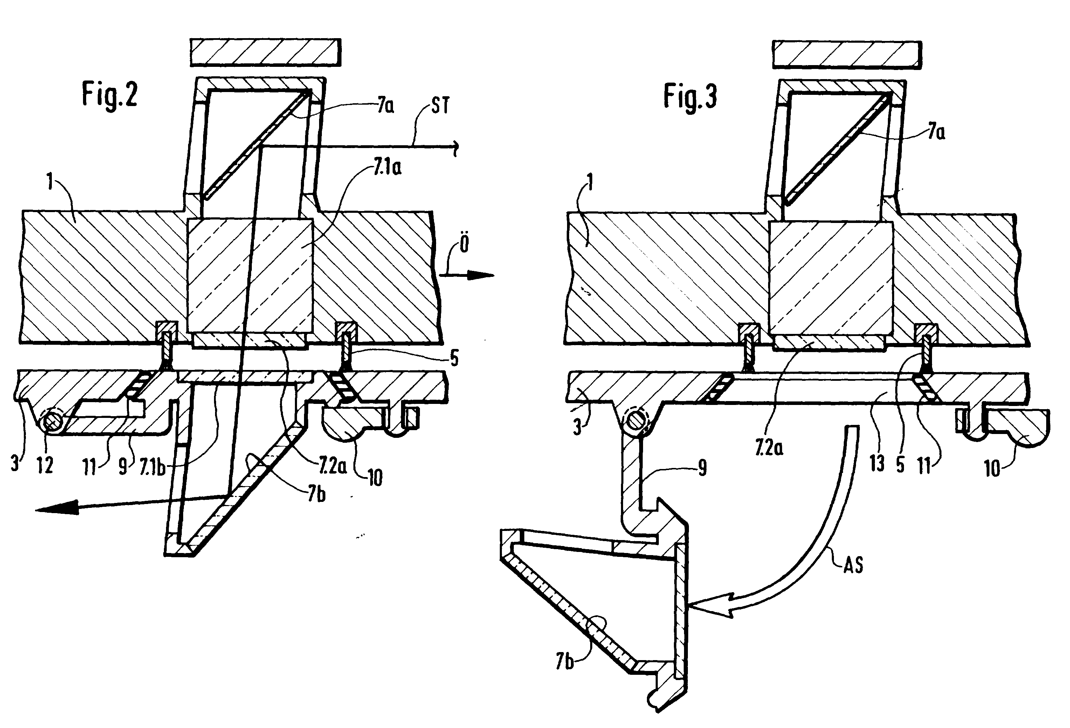

Im Bereich der Luke sind Sichtgeräte in Form von Winkelspiegeln angeordnet, von denen sich beispielsweise der Winkelspiegel 8 außerhalb der Verschiebungsbahn des oberen Deckelteils 1 befindet und jeweils als eine Einheit aufgebaut ist. Ein weiterer Winkelspiegel 7a-7b befindet sich in der Verschiebungsbahn des oberen Deckelteils 1 und ist in ein fahrzeugfestes Unterteil 7b und ein im oberen Deckelteil 1 angeordnetes und mit diesem verschiebbares Oberteil 7a aufgeteilt. In der Schließstellung des oberen Deckelteils 1 sind das Oberteil 7a und das Unterteil 7b des Winkelspiegels fluchtend zueinander und im optischen Kontakt angeordnet. Wie aus Fig. 2 zu ersehen, verläuft dann der Strahlengang ST durch das als Ausblickmodul gestaltete Oberteil 7a, durch einen in dem oberen Deckelteil 1 angeordneten Glasblock 7.1a und eine obere Abschlußscheibe 7.2a in den Zwischenraum zwischen dem oberen Deckelteil 1 und der Dachplatte 3 des Fahrzeugs. Von dort läuft der Strahlengang weiter durch eine untere Abschlußscheibe 7.1b in das Unterteil 7b des Winkelspiegels, das als Einblickmodul ausgebildet ist.

Der Bereich zwischen der oberen Abschlußscheibe 7.2a und der unteren Abschlußscheibe 7.1b ist von einem Bürstenring 5 umgeben, der an der Unterseite des oberen Deckelteils 1 befestigt ist und dessen Borsten auf der Oberfläche der Dachplatte 3 aufsitzen. Bei einer Verschiebung des oberen Deckelteils 1 in Pfeilrichtung Ö beim Öffnen der Luke überstreicht der Bürstenring die Oberfläche der unteren Abschlußscheibe 7.1b und reinigt sie von daran haftenden Schmutzteilchen. Das gleiche passiert auch bei der Gegenbewegung, also beim Schließen der Luke. Der Bürstenring 5 wirkt also als Bürstenabdichtung des Raumes, in dem sich die beiden Abschlußscheiben befinden und der vom Strahlengang ST durchsetzt ist und als Reinigungsvorrichtung für die Oberfläche der unteren Abschlußscheibe 7.1b.

Da sich im Raum innerhalb des Bürstenringes 5 und auch an der Unterseite der oberen Abschlußscheibe 7.2a Schmutzteilchen befinden können, ist eine Einrichtung vorgesehen, mittels der dieser Raum vom inneren des Fahrzeugs her zugänglich gemacht werden kann.

Hierzu ist das Unterteil 7b des Winkelspiegels in eine Klappe 9 integriert, welche um ein Scharniergelenk 12 in das Innere des Fahrzeugs abschwenkbar ist. Dies ist in Fig. 3 dargestellt. Die Klappe 9 kann in Pfeilrichtung AS herabgeschwenkt werden und gibt dann eine Durchtrittsöffnung 13 frei, über die der Raum innerhalb des Bürstenrings 5 zugänglich wird und durch die auch die untere Oberfläche der oberen Abschlußscheibe 7.2a gereinigt werden kann. In der Durchtrittsöffnung 13 befindet sich ein Dichtungsring 11, über den die geschlossene Klappe 9 dichtend mit den Rändern der Durchtrittsöffnung 13 in der Dachplatte 3 verbunden ist. In der Schließstellung wird die Klappe 9 durch eine Verriegelungsvorrichtung 10 festgehalten.

## Patentansprüche

1. Winkelspiegel an der Ein- Ausstiegsluke eines Kampffahrzeugs, bei welcher der Lukendeckel aus zwei mindestens in der Schließstellung übereinander angeordneten Deckelteilen (1,2) aufgebaut ist, wobei der obere Deckelteil (1) oberhalb des oberen Randes der Lukenöffnung (6) angeordnet und parallel zur Schließebene der Luke verschiebbar ist und der untere Deckelteil (2) am oberen Deckelteil (1) senkrecht zur Schließebene der Luke bewegbar angeordnet ist und der Winkelspiegel (7a,7b) aus einem mit der Dachplatte (3) des Kampffahrzeugs verbundenen und in den Innenraum des Kampffahrzeugs hineingeführten Unterteil (7b) und einem durch den oberen Deckelteil (1) hindurchgeführten und mit diesem verschiebbaren Oberteil (7a) besteht und in der Schließstellung des oberen Deckelteils (1) jeweils Oberteil (7a) und Unterteil (7b) des Winkelspiegels fluchtend in optischem Kontakt angeordnet sind, dadurch gekennzeichnet, daß an der Unterseite des oberen Deckelteils (1) mindestens in einem Bereich, der bei geschlossenem oberen Deckelteil (1) in Öffnungsrichtung (Ö) unmittelbar vor dem Winkelspiegel (7a, 7b) liegt, eine Reinigungsbürste (5) mit nach unten weisenden, die Fahrzeugoberseite berührenden Borsten angeordnet ist, deren Ausdehnung quer zur Öffnungsrichtung mindestens dem Durchmesser des Unterteils (7b) des Winkelspiegels an der Fahrzeugoberseite entspricht.

2. Winkelspiegel nach Anspruch 1, dadurch gekennzeichnet, daß die Reinigungsbürste als den Winkelspiegel (7a-7b) umgebender Bürstenring (5) ausgebildet ist, dessen Durchmesser größer ist als der Durchmesser des Unterteils (7b) des Winkelspiegels an der Fahrzeugoberseite.

3. Winkelspiegel nach Anspruch 1 oder 2, dadurch gekennzeichnet, daß das Unterteil (7b) des Winkelspiegels in den Innenraum des Kampffahrzeugs abschwenkbar ausgebildet ist.

4. Winkelspiegel nach Anspruch 3, dadurch gekennzeichnet, daß das Unterteil (7b) des Winkelspiegels in eine Klappe (9) integriert ist, die eine Durchtrittsöffnung (13) in der Dachplatte (3) des Kampfahrzeugs verschließt und nach Lösen einer Verriegelung (10) in den Innenraum des Kampffahrzeugs hinein abschwenkbar ist.

## Claims

1. Angle mirror at the access hatchway of a combat vehicle, the hatchway cover comprising two cover parts (1, 2) which at least in the closed position are disposed one above the other, the top cover part (1) being disposed above the top edge of the hatchway opening (6) and being displaceable parallel to the closing plane of the hatchway and the bottom cover part (2) being disposed on the top cover part (1) so as to be movable at right angles to the closing plane of the hatchway, and the angle mirror (7a, 7b) comprising a bottom part (7b), which is connected to the roof panel (3) of the combat vehicle and conveyed into the interior of the combat vehicle, and a top part (7a), which is conveyed through and displaceable with the top cover part (1), and in the closed position of the top cover part (1) top part (7a) and bottom part (7b) of the angle mirror in each case being disposed aligned in optical contact,
characterized in that disposed at the underside of the top cover part (1) at least in a region, which when the top cover part (1) is closed lies in opening direction (Ö) immediately in front of the angle mirror (7a, 7b), is a cleaning brush (5) with downwardly directed brushes, which are in contact with the top of the vehicle and of which the extension at right angles to the opening direction corresponds at least to the diameter of the bottom part (7b) of the angle mirror at the top of the vehicle.

2. Angle mirror according to claim 1, characterized in that the cleaning brush takes the form of a brush ring (5), which surrounds the angle mirror (7a-7b) and the diameter of which is greater than the diameter of the bottom part (7b) of the angle mirror at the top of the vehicle.

3. Angle mirror according to claim 1 or 2, characterized in that the bottom part (7b) of the angle mirror is designed so as to be capable of swivelling down into the interior of the combat vehicle.

4. Angle mirror according to claim 3, characterized in that the bottom part (7b) of the angle mirror is integrated into a flap (9), which closes a through-opening (13) in the roof panel (3) of the combat vehicle and, after cancellation of an interlock (10), may swivel down into the interior of the combat vehicle.

## Revendications

1. Miroir angulaire placé sur l'écoutille d'entrée et de sortie d'un véhicule de combat, sur laquelle le panneau d'écoutille est composé de deux éléments (1, 2) superposés, au moins en position de fermeture, l'élément supérieur (1) de ce panneau étant disposé au-dessus du bord supérieur de l'ouverture (6) et pouvant coulisser parallèlement au plan de fermeture de l'écoutille et l'élément inférieur (2) étant disposé, sur l'élément supérieur (1), de manière mobile perpendiculairement au plan de fermeture de l'écoutille et le miroir angulaire (7a, 7b) étant constitué d'un élément inférieur (7b), relié au blindage supérieur (3) du véhicule de combat et pénétrant dans l'espace intérieur de celui-ci et un élément supérieur (7a) traversant l'élément supérieur (1) du panneau d'écoutille et pouvant coulisser en même temps que celui-ci, tandis qu'en position de fermeture de l'élément supérieur (1) du panneau respectivement l'élément supérieur (7a) et l'élément inférieur (7b) du miroir sont disposés en alignement et contact optique, caractérisé en ce que sur le côté inférieur de l'élément de panneau supérieur (1), au moins dans une zone située, lorsque l'élément (1) est fermé, dans le sens de l'ouverture (Ö) immédiatement avant le miroir (7a, 7b), est disposée une brosse de nettoyage (5) dont les soies sont orientées vers le bas et en contact avec la face supérieure du véhicule, l'extension de cette brosse transversalement à la direction d'ouverture correspondant au moins au diamètre de l'élément inférieur (7b) du miroir sur la face supérieure du véhicule.

2. Miroir selon la revendication 1, caractérisé en ce que la brosse de nettoyage est réalisée sous la forme d'une brosse annulaire (5) entourant ledit miroir (7a, 7b), le diamètre de cette brosse étant supérieur à celui de l'élément inférieur (7b) dudit miroir présent sur la face supérieure du véhicule.

3. Miroir selon les revendications 1 ou 2, caractérisé en ce que la partie inférieure (7b) du miroir est réalisée de manière à pouvoir basculer vers l'espace intérieur du véhicule de combat.

4. Miroir selon la revendication 3, caractérisé en ce que l'élément inférieur (7b) dudit miroir est intégré dans un clapet (9) qui ferme un orifice de pénétration (13) présent dans le blindage supérieur (3) du véhicule de combat et qui peut être basculé vers l'espace intérieur de ce véhicule de combat après le déverrouillage d'un verrou (10).
